# EUROPEAN PATENT APPLICATION

(11) **EP 0 573 782 A2**
(43) Date of publication of application: **15.12.1993**
(21) Application number: 93107346.4
(22) Date of filing: 06.05.1993
(51) Int. Cl.: B32B 27/08, B65D 75/58, G03C 3/00, B32B 15/08

(54) **Easily tearable multilayer packaging film material**

(30) Priority: 13.05.1992 US 882387
(71) Applicant: EASTMAN KODAK COMPANY, Rochester, New York 14650-2201 (US)
(72) Inventor: Light, Susan L., c/o EASTMAN KODAK COMPANY, Rochester, New York 14650-2201 (US); Stachowski, Edmund B., c/o EASTMAN KODAK COMPANY, Rochester, New York 14650-2201 (US); Peterson, Gary D., c/o EASTMAN KODAK COMPANY, Rochester, New York 14650-2201 (US)
(74) Representative: Blickle, K. Werner, Dipl.-Ing.

(57) **Abstract**

A packaging material has a laminated structure **10** composed of a first layer **12** comprising oriented polypropylene, a second layer **14** comprising a polyether urethane adhesive material, a third layer **16** comprising aluminum foil or a flexible thermoplastic membrane resin material with a metallic membrane material, and a fourth layer **18** comprising a resin extrudate material. The oriented polypropylene provides linear tear characteristics that enables the package **22,24** to tear continuously along a defined line. The second layer **14** provides an adhesive lamination between the first **12** and third layer **16**. An aluminum foil layer provides moisture and light barrier protection. In the fourth layer **18**, ethylene copolymer resin is bonded to the aluminum foil layer and imparts heat seal characteristics required for package fabrication. In a alternative embodiment, a primer material layer **20** is provided to bolster the adhesion between one or more of the various layers **12,14,16,18** of the laminate structure **10**. The package **22,24** formed from the material of the invention has superior tear continuation, toughness and penetration resistance properties.

## Description

The invention relates generally to packaging materials, and more particularly, to an easily tearable multilayered packaging film material which has light shielding and moisture barrier protection.

Various conventional photographic film products are overwrapped with a flexible material. The overwrap is typically heat sealed such that the resultant package is hermetic, thus protecting the sensitive product from light and moisture. A typical overwrap material structure for films is a lamination with the outermost layer being a printed paper, the second innermost layer being an adhesive, the third innermost layer being aluminum foil, and the innermost layer being a sealant, i.e., an agent that promotes sealing the overwrap material. The overwrapped film pack is packaged for sale in various carton configurations. The carton provides a rectangular shape conducive to shelf stacking and display. The carton also serves as a vehicle for graphic presentation of pertinent product information to the user. Professional photographers utilizing film products generally have unique requirements related to convenience of use. Most important of these requirements is the need to open film products quickly for camera loading in fast-paced settings.

Characteristic of today's packaging, the overwrap material must have a low water vapor transmission rate, light integrity properties, and heat sealability. Most importantly, the overwrap material and the surrounding carton must allow for quick product access by the user. While some progress to improve access to packaged products has been made, there remains a shortcoming of packaging material for conventional professional photographic film rolls in that a means is needed for continuously tearing the package overwrap material without having to make multiple attempts to open the product. Another problem with conventional paper-based photographic packaging material is that since the outer layer of the wrap is printed or dyed paper, the wrap is matted or dull due to the paper granularity and, therefore, it provides an unattractive appearance. Still further, another problem with the present professional photographic film packaging material is that the paper/foil lamination tends to "pinhole", i.e., the outer layer of paper is lacking in strength characteristics, and tiny holes may be created which compromise the hermetic integrity of the package. Moreover, the conventional package material adds excessive material to the solid waste stream.

Although conventional paper offers some tear initiation characteristics, the resultant package is generally not easy to open in a consistent manner. Several attempts have been made to improve the packaging material for photographic film. For instance, U.S. patent Nos. 4,906,517, 4,871,613, and 4,452,846 teach laminate structures for photographic packaging applications. The laminate structure in the '517 patent comprises a polypropylene layer between an ethylene resin ( e.g., linear low density polyethylene (LLDPE)) and a flexible sheet layer laminated through an adhesive layer to the resin film layer. The '613 patent teaches a multilayer structure comprising a polyolefin resin layer comprising a mixture of linear low density polyethylene (LLDPE), low density polyethylene (LDPE), ethylene-ethyl acrylate (EEA), and ethylene-vinyl acrylate (EVA). The laminate structure of '846 patent has a LLDPE resin layer. None of these patents suggests any recognition of the need for an easily tearable packaging material for photographic film or provides adequate teaching or motivation to solve the problem of easy access to the product.

Therefore, a persistent need exists for a packaging material for photographic film products that has continuous linear tear properties to facilitate access to the product, is resistant to pinholes and has overall customer appeal.

It is, therefore, an object of the invention to provide a packaging material that overcomes the shortcomings of the prior art. Accordingly, for accomplishing these and other objects of the invention, there is provided a packaging material composed of a first layer comprising an oriented flexible polymeric film material for promoting continuous and easy tear properties. The film material has a front side for receiving surface printed information and a back side for receiving reverse printed information and for adhering to an adjacent layer. A second layer comprising an adhesive material is applied to the first layer for bonding the first layer to a third layer. The third layer comprises a substantially light shielding and moisture impervious material. Further, a fourth layer comprising a resin extrudate material is bonded to the third layer to form the packaging material of the invention.

Thus, important advantages of the package material of the invention are that it is easily tearable, is resistant to pinholes, has customer appeal, reduces material added to the solid waste stream and provides moisture and light protection.

The foregoing as well as other objects, features and advantages of this invention will become more apparent from the appended figures wherein like reference numerals denote like elements, and wherein:
Figure 1 is a sectional view of a preferred embodiment of the invention;
Figure 2 is a partial sectional view of the embodiment of Fig. 1;
Figure 3 is a sectional view of an alternative embodiment of the invention;
Figure 4 is a perspective view of the package of the invention fully enclosing product;
Figure 5 is the package of the invention exposing a tear line;
Figure 6 is an enlarged fragmentary view of the package of the invention partially exposing product;
Figure 7 is a perspective view of an alternative embodiment of the invention; and,
Figure 8 is the embodiment of the invention in Figure 7 partially exposing product along a tear line.

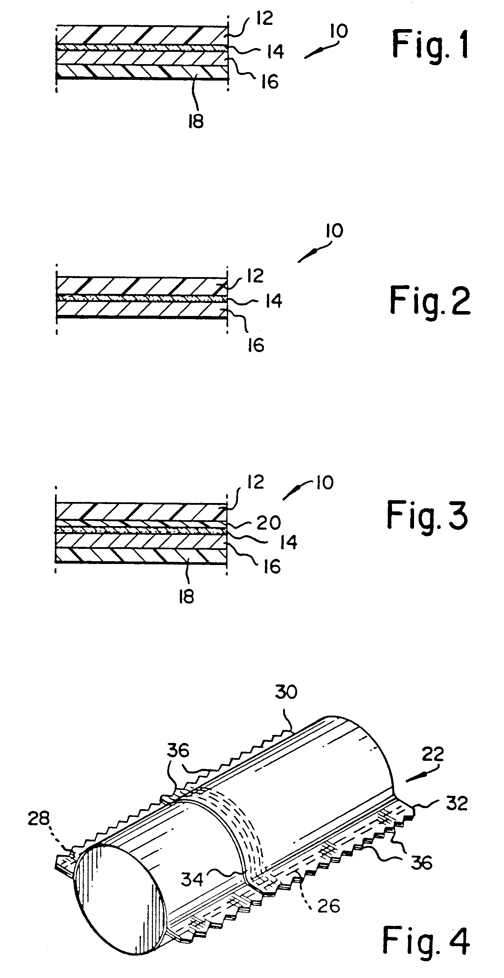

The preferred embodiment of the invention comprises a laminated material structure **10** (Fig. 1), i.e., a flexible material having more than one layer, composed of a first layer **12** of extruded or co-extruded oriented polypropylene, a second layer **14** of polyether urethane, a third layer **16** of aluminum foil or thermoplastic membrane resinous material, and a fourth layer **18** of a resin extrudate material.

The first layer **12** of the laminated material structure **10** of the invention is comprised of a flexible extruded or co-extruded film material, preferably polypropylene. The polypropylene can either be uniaxially or biaxially oriented, although biaxially oriented polypropylene is preferred. Polypropylene, a synthetic crystalline thermoplastic polymer, may be molecularly oriented during fabrication. The preferred oriented polypropylene is TORAY® type YT-22 biaxially oriented polypropylene, manufactured by Toray Industries, Inc. Japan. Those skilled in the art will appreciate that any suitable oriented polypropylene within the requirements of the invention may be used.

The first layer **12** is the outermost exposed layer of the packaging material and is capable of receiving reverse print or surface printed information. Reverse print is achieved by printing the desired information, e.g., general marketing information or, logos, etc., on the unexposed or back side of the flexible film material before the layer **12** is laminated to an adjacent layer, as described in detail below, so that the readable print is inside of layer **12**. Any suitable reverse printing method may be used on the flexible film material layer **12**, such as gravure or flexographic methods. Surface print is information printed, by any suitable means, on the exposed side of the flexible film material and capable of being read on the exposed side. The flexible film material comprising the first layer **12** in the preferred embodiment is also made receptive to aqueous or solvent ink systems. A solvent ink system that works well on the flexible film layer **12** and used by the inventors to either surface or reverse print the film material layer are transparent gold and red inks both made by Croda Inks Corporation of Lockland, Ohio. By use of such aqueous or solvent ink systems, the flexible film material comprising the first layer **12** of the preferred laminate material structure **10** can, therefore, be printed by use of transparent, opaque or metallic systems utilizing either gravure or flexographic methods.

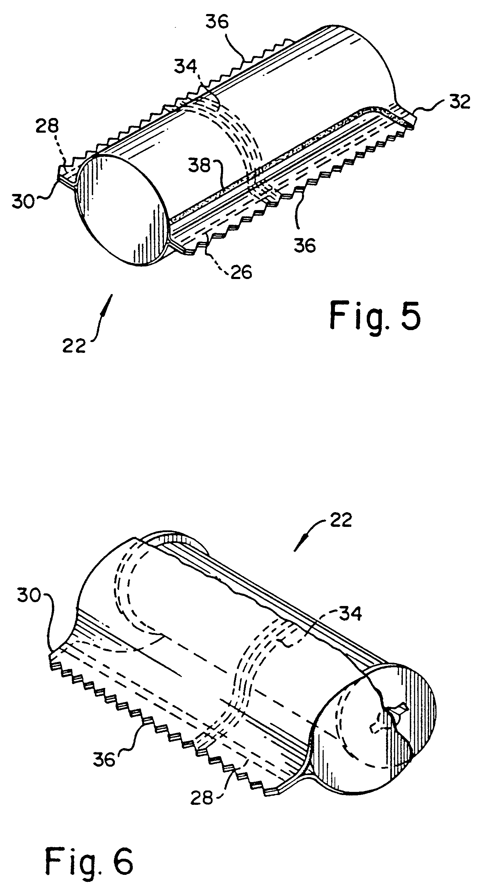

Alternative materials contemplated as the flexible film material comprising the first layer **12** include: polyester (PET), oriented polyamide, polyvinyl chloride (PVC), polyethylene (PE), and polyvinylidiene chloride (PVDC) films. The thickness of the first layer **12** ranges from about 6 to 200 microns. The preferred thickness of the first layer is about 25.4 microns. According to test performed by the inventors, packaging material having a layer **12** with a thickness in the above range contributes to enhanced strength and moisture barrier properties of the package structure. In the preferred package laminate material structure **10**, the outer first layer **12** of oriented polypropylene imparts the desired tear characteristics which facilitate opening of the constructed package, discused in more details below. Therefore the linear tear characteristics provided by the first layer **12** of the laminated structure enable the user to tear the packaging material in a straight line manner down the length of the generally small, tightly formed film package (Figs. 4 and 5). The user can thus gain access to the product contained in the packaging material of the invention through one tearing motion.

The second layer **14** of the preferred embodiment comprises a laminating material for bonding the first layer **12** to a third layer **16**, described more fully below (Fig. 1 & 2). There are several laminating methods which may suitably be used to adhere the layers **12,14,16** of the preferred structure including: heat sealing (e.g., hot bar sealing, flame melt adhesion, hot blast adhesion, impulse heat sealing, or supersonic adhesion), adhesive methods (wet laminating, dry laminating or hot melt laminating), or extrusion or co-extrusion methods. An adhesive laminating method is preferred because it minimizes webbing, i.e., stretching of the flexible polymeric material layer, or delamination of the adjoining layers. The above laminating methods may use as a bonding agent thermoplastic resin melt adhesives, such as, polyolefin adhesives, hot melt type gum adhesives, and solution type adhesions.

The preferred laminating material is an adhesive material supplied by Morton Corp. of Chicago, Illinois bearing the trade name Morton 76T3E comprising a polyether urethane component of a two-part laminating adhesive which requires the use of a co-reactant. Those skilled in the art will appreciate that any suitable adhesive material may be used within the definition of the invention such as Petaflex® supplied by National Adhesives of Bridgwater, New Jersey. The second layer **14** is required to provide high bond strength between the first layer **12** and third layer **16**, high heat resistance, moderate chemical resistance as well as optical clarity. The preferred adhesive material may be used in the range from about 1.0 to 5.0 pounds per ream wet weight, preferably 1.5 to 3.5 pounds per ream wet weight. Good bonding between the polypropylene layer and the adjacent layer, described below, is provided in the above range. Generally, the preferred adhesive material has a solid content of about 20 to 90 percent, preferably 40 to 80 percent. The viscosity of the adhesive material that works best in the invention is about 500 to 15,000 cps at 25°C with a bulk density in the range of 6 to 11 pounds per gallon.

In the third layer **16** of the preferred embodiment of the invention, aluminum foil skin, i.e., a very thin layer, is bonded to the flexible polypropylene layer by the adhesive layer. The foil layer **16** provides the bulk of the light barrier, low water vapor transmission, and low oxygen transmission characteristics to the total structure. Any suitable foil within the requirements of the invention may be used. Suppliers of aluminum foil within the requirements of the invention include Alumax, Alcoa, Consolidated Aluminium Co., and National Aluminum Co.. The thickness of the aluminum foil layer **16** is in the range from 6 to 200 microns, preferably 10 to 100 micron. Test results indicate that foil thickness in the indicated range provides desired moisture and light characteristics and has fewer undesirable "pinholes". Moreover, the foldability nature of aluminum foil, i.e., the ability of the material to hold a fold, provides enhanced forming of the package of the invention. Alternatively, the aluminum foil can be replaced with a flexible sheet with a metallic membrane layer deposited on the sheet. Uniaxially or biaxially oriented thermoplastic resin film such as polyester, polyamide, polyethylene, and polypropylene would be preferred due to physical strength characteristics. The metallic membrane layer may be formed of such pure metals as aluminum, tin, zinc, nickel, or copper alloys, with aluminum being the most preferred alloy. This metallized membrane layer ranges from 55 to 1200 Å. Metallization of the flexible layer can be accomplished by vacuum deposit, ion plating, or electron beam heating, although vacuum deposition is preferred. Both sides or only one side of the flexible layer may be metallized to provide barrier protection. The side most preferred for metallization is the outer, exposed surface. It has been determined that metallization reduces the occurrence of pinholes as compared to the use of aluminum foil because additional strength is imparted to the layer **16**.

The fourth layer **18** (Fig. 1) of the preferred embodiment is a resin extrudate containing an ethylene copolymer resin. The resin extrudate is preferably applied to layer **16** using an extrusion coating process although those skilled in the art will appreciate that other suitable bonding methods, e.g., lamination, within the requirements of the invention may be used. Preferable copolymer resin types for this application include linear low density polyethylene (LLDPE), low density polyethylene (LDPE), ethylene-methyl acrylate (EMA), ethylene-ethyl acrylate (EEA), ethylene-vinyl acrylate (EVA), and most preferred ethylene-acrylic acid (EAA). The preferred EAA is Primacor 3440 manufactured by Dow Chemical Co., Midland, Michigan. The density of the ethylene copolymer resin layer may be in the range from about 0.870 to 0.970 g/cc, preferably 0.920 to 0.950 g/cc. Enhanced heat sealing of the package of the invention is achieved with resin densities in this range. The melt index of the ethylene copolymer resin can be in the range from about 1.0 to 15.0 dg/min. for good performance. Furthermore, the acrylic acid content of the preferred resin layer measured by a direct titration procedure is in the range from about 7.0 to 12.0 percent. The thickness of the fourth layer **18** in the preferred embodiment is about from 5 microns to about 140 microns, preferably from about 10 to 25 microns. The fourth layer **18** provides the heat seal characteristics necessary for proper package fabrication.

In an alternative embodiment shown in Fig. 3, a primer material layer **20** is added between one or more layers **12,14,16,18** to improve adhesion. Preferably, layer **20** is used between layer **12** and layer **14** of the laminated structure **10**. Layer **20** works well as a bonding agent for the aqueous or solvent ink system applied to the first layer, as described above. The preferred primer material is Mica A131X® waterbone extrusion primer made by Mica Corporation of Stratford, Ct. Other materials that may be used as a primer material layer **20** within the contemplation of the invention include polyethyleneimine, polyisocyanate, polyurethane, polyolefin, polyester, and polyethylene components. Alternatively, corona electrostatic discharge may also be used to enhance adhesive bond levels between the several layers **12,14,16,18**. The preferred method of applying the primer layer **20** between any of the several layers **12,14,16,18** of the laminated structure **10** is by a gravure method.

Thus, the above alternative embodiment of the invention having the laminate structure **10** with the several layers **12,14,16,18** plus a primer material layer **20,** described fully above, comprises the package material of the invention having moisture barrier resistance, imperviousness to light, and superior linear tear characteristics. In addition, it has been found by the inventors that the packaging material of the invention has other surprisingly superior characteristics, described below, when compared to conventional photographic film packaging material. The preferred embodiment of the packaging material of the invention has a thickness in the range from about 45.7 microns to about 88.9 microns, preferably from about 50.8 microns to about 64.5 microns. According to test of the inventors, the thickness of conventional paper-based packaging material is about 95.9 microns compared to about 47.9 microns for material of the invention. Thus, the package material of the invention achieves its superior results utilizing less material.

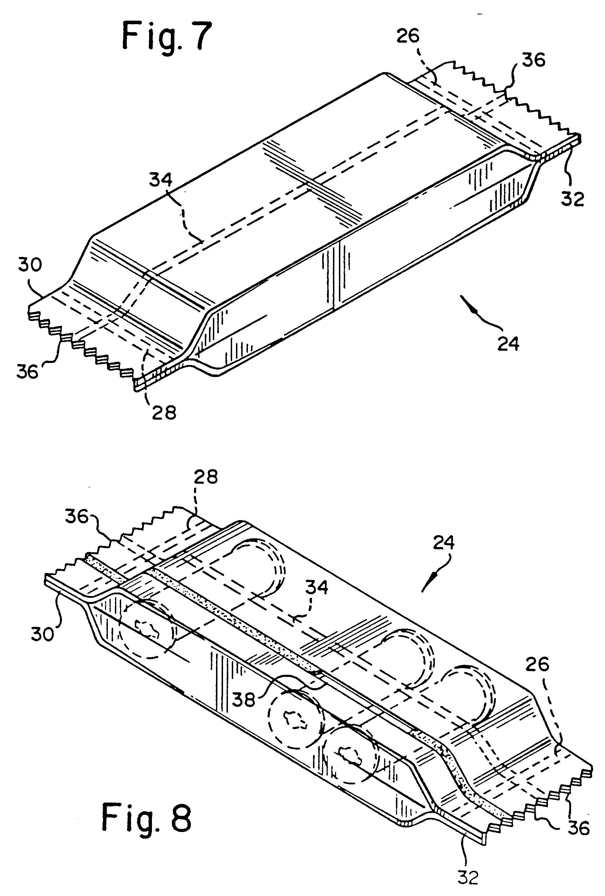

A package **22** using the packaging material of the invention is formed by radially and longitudinally hermetically sealing the ends of the material of the invention around the article(s) to be packaged (Fig. 4-6). Although just about any article or multiple articles can be accommodated in the packaging material of the invention, for example food products, batteries, and the like, substantially cylindrical photosensitive film products to be stored and shipped are perhaps the most convenient. Thus, in an alternative embodiment the package of the invention, multiple products may be overwrapped with the material of the invention to form a multiple product package **24** (Fig. 7 & 8). Accordingly, an article of manufacturing comprises a photographic product and an overwrap material, as described above, surrounding the product. Any process for sealing packages **22,24** can be used, such as hot or cold sealing. In a preferred embodiment, packages **22,24** have seals **26,28** along the ends **30,32** of packages **22,24**. A seal **34** is formed along a radial portion partially around the periphery of package **22** or along the length of package **24** and intersecting seals **26,28** in the ends **30,32** to provide a complete hermetic seal of the package **22,24** (Figs. 4 & 5). Those skilled in the art will appreciate that practically any sealing arrangement can be used within the requirements of the invention so long as the package **22,24** is hermetically sealed. The preferred means of initiating tear of the package **22,24** is to form a serrated portion **36** in either end **26,28** (Figs. 4-8). Alternatively, those skilled in the art will appreciate that other tear initiation means may be used such as forming a notch or slit in any portion of the package **22,24**.

Elmendorf comparative tear test were conducted by the inventors in accordance with ASTM D 1922 on the packaging material of the invention (A) and a conventional paper-based packaging material (B), indicated in the Table below. The Elmendorf test measures the force necessary to continue a tear once initiated. The results indicate that the tear force required to continue a tear in the conventional paper-based packaging (B) is 73 grams in the machine direction (MD) and 109 grams in the cross direction (CD). In contrast and to the surprise of the inventors, on a similar specimen of material of the invention (A), the tear strength in the cross direction measured 47 grams. Thus, the material of the invention (A) requires minimum force for tear continuation.

Moreover, penetration resistance, i.e., the force required for an object to penetrate the material, was compared for the material of the invention (A) and a conventional photographic film material (B). The penetration resistance test employed is the ASTM test F1306-90. Measurements were taken on the both the exposed first layer **12** (gold side) and fourth layer **18** (silver side) of the test sample. The results indicate that compared to the conventional photographic packaging material (B), the penetration resistance for the material of the invention (A) is greater than three times that of conventional packaging material (B), i.e., 734 grams for the conventional material (B) compared to 2860 grams for the material of the invention (A), measured on the outside of each test sample. A similar result was obtained when the test was taken along the inside of the test samples, i.e., 726 grams for the conventional material (B) compared to 3091 grams for the material of the invention (A). Consequently, it has been noted during testing and evaluation that in multipack film packages, comprising generally up to about five individual film roll packs, tearing of individual packs by deflection of adjacent packs toward one another during transit and handling is eliminated with the packaging material of the invention (A). Thus, the material of the invention (A) is far superior in penetration strength than the conventional paper-based packaging materials (B).

Furthermore, the packaging material of the invention (A) has a superior tensile strength compared to conventional packaging materials (B). Tensile strength tests were conducted in accordance with ASTM test D882 on test samples of the material of the invention (A) and conventional packaging material (B). The results surprisingly indicated that the conventional material (B) yielded a tensile strength of 89 lbs/in² compared to 5087 lbs/in² for the packaging material of the invention (A) (both measurements were taken in the machine direction). Similar results were obtained when the toughness was measured in the cross direction, i.e., 72 lbs/in² for conventional test sample (B) compared to 5382 lbs/in² for the invention packaging material (A). Thus, the packaging material **22,24** of the invention (A) has far superior toughness properties when compared to the conventional paper-based packaging material (B).

**TABLE**

| **Test Sample** | **Tear Force (Grams) MD/CD** | **Penetration Resistance (Grams) OS/SS** | **Tensile Strength (lbs/in²) MD/CD** |
|---|---|---|---|
| **A Invention** | 47/47 | 2860/3091 | 5087/5382 |
| **B (Prior Art)** | 73/109 | 734/726 | 89/72 |

Therefore, the data indicate that the packaging material of the invention has overall far superior physical properties important for accessing the product packaged in the material and for preventing unwanted pinholes and tears during transit and handling as described above.

Accordingly, the user of the packaging material of the invention can easily access product contained in the package **22,24** by simply initiating tear at the serrated portion **36**. The tear will then continue along a predetermined line **38** in the package **22,24** caused by the oriented polypropylene first layer **12** until the product is exposed and accessible to the user (Figs. 5, 6 and 8).

The invention has been described in detail with reference to preferred embodiments thereof, but it will be understood that variations and modifications can be effected within the spirit and scope of the invention.

## Claims

1. An easily tearable multilayer sealable packaging material which is substantially impervious to moisture and a barrier to light for storing and transporting articles of manufacture, the material characterized by:
a) a first layer comprising an oriented extruded or co-extruded flexible film material having a front side capable of receiving surface printed information and a back side capable of receiving reverse printed information;
b) a second layer comprising an adhesive material for bonding said first layer to a third layer;
c) a third layer comprising a light barrier and moisture impervious material, said third layer being bonded to the back side of said first layer by said second layer; and,
d) a fourth layer comprising a resin extrudate material, said extrudate material being bonded to said third layer.

2. The packaging material of claim 1 characterized in that said first layer and said second layer are laminated by an adhesive material comprising polyether urethane.

3. The material recited in claim 1 characterized in that said flexible polymeric film material is extruded or co-extruded oriented polypropylene.

4. The material recited in claim 1 characterized in that said moisture impervious and light barrier material is aluminum foil or a flexible thermoplastic resin film with a metallic membrane layer.

5. The material recited in claim 1 characterized in that said extrudate material comprises an ethylene copolymer resin.

6. An easily tearable, multilayer sealable packaging material substantially impervious to moisture and a barrier to light for storing and transporting photosensitive film products, the material characterized by:
a) a first layer comprising an extruded or coextruded oriented polypropylene flexible film material having a front side capable of receiving reverse or surface printed information and a back side;
b) a second layer comprising a polyether urethane adhesive material;
c) a third layer comprising aluminum foil or a flexible thermoplastic membrane resin material with a metallic membrane material for light and moisture shielding, said aluminum foil or said flexible thermoplastic membrane resin material being laminated to the back side of said polypropylene material by said polyether urethane adhesive material; and,
d) a fourth layer comprising a resin extrudate material bonded to said aluminum foil layer.

7. The packaging material of claim 6 characterized in that said resin extrudate material is extrusion coated onto the aluminum foil layer.

8. The packaging material of claim 6 characterized in that said resin extrudate material is ethylene-acrylic acid.
